# FASCICULE DE BREVET EUROPEEN

(11) **EP 2 630 009 B1**
(45) Date de publication et mention de la délivrance du brevet: **03.12.2014**
(21) Numéro de dépôt: 11773054.9
(22) Date de dépôt: 08.09.2011
(51) Int. Cl.: B60R 21/34

(54) **SUPPORT POUR GRILLE D'AUVENT ET ENSEMBLE D'AUVENT COMPRENANT UN TEL SUPPORT**
MONTAGEHALTERUNG FÜR EIN WINDLAUFGITTER UND WINDLAUFANORDNUNG MIT EINER DERARTIGEN MONTAGEHALTERUNG
MOUNTING FOR A COWL VENT GRILL, AND COWL VENT ASSEMBLY INCLUDING SUCH A MOUNTING

(30) Priorité: 20.10.2010 FR 1058563
(43) Date de publication de la demande: 28.08.2013
(73) Titulaire: Peugeot Citroën Automobiles SA, 78140 Vélizy Villacoublay (FR)
(72) Inventeur: PONTONNIER, Julien, F-92360 Meudon La Foret (FR)
(74) Mandataire: Fosse, Danièle
(86) Numéro de dépôt international: PCT/FR2011/052060
(87) Numéro de publication internationale: WO 2012/052641

(56) Documents cités:
- FR-A1- 2 895 353
- FR-A1- 2 899 554

## Description

La présente invention concerne un support pour supporter une grille d'auvent, laquelle est agencée sur un véhicule entre un bord transversal arrière d'un capot moteur et un bord transversal inférieur d'un pare-brise avant. Par ailleurs, la présente invention concerne un ensemble d'auvent comprenant un tel support.

La présente invention trouve notamment application dans la construction de véhicules, en particulier de véhicules automobiles.

Une grille d'auvent est agencée sur un véhicule entre, d'une part, le bord transversal arrière d'un capot recouvrant le compartiment moteur du véhicule, et, d'autre part, le bord transversal inférieur d'un pare-brise avant.

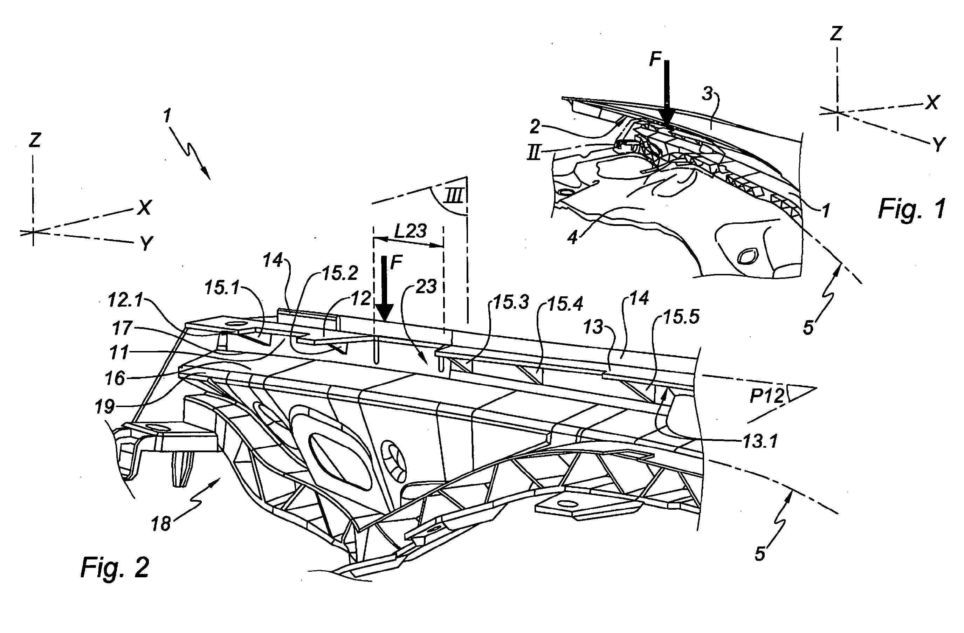

Comme le montre la figure 1, un support 1 de l'art antérieur est placé près d'un bord transversal arrière 2 d'un capot moteur 3 et au-dessus d'un collecteur d'auvent 4.

Lors d'un choc entre le véhicule et un piéton, les jambes du piéton heurtent le pare-choc avant du véhicule, le fémur heurte l'avant du capot moteur et la tête du piéton heurte l'ensemble d'auvent au niveau de la grille d'auvent et/ou du bord latéral arrière du capot moteur.

C'est pourquoi l'ensemble d'auvent doit pouvoir absorber une partie de l'énergie produite lors d'un choc avec la tête du piéton, de façon à limiter la gravité des blessures.

FR2895353 décrit un ensemble d'auvent comportant une grille d'auvent dont le support comprend une plaque s'étendant suivant le bord inférieur du pare-brise avant, une bande transversale à la plaque et de nombreuses nervures à section carrée qui s'étendent de la plaque à la bande. Le support de FR2895353 comprend en outre un plateau relié à la plaque et à la bande de façon à former une poutre. Ce plateau est maintenu par une bande frangible dont la rupture permet d'amortir en partie le choc entre le support et la tête du piéton. FR 2 899 554 décrit un support conformement au préambule de la revendication 1.

Cependant, un tel support peut parfois absorber une quantité d'énergie insuffisante pour amortir un choc, en particulier car la course en déformation de la poutre est limitée lorsque la poutre bute sur des éléments rigides situés sous la poutre.

La présente invention vise notamment à résoudre, en tout ou partie, les problèmes mentionnés ci-avant.

A cet effet, l'invention a pour objet un support, pour supporter une grille d'auvent agencée sur un véhicule entre un bord transversal arrière d'un capot moteur et un bord transversal inférieur d'un pare-brise avant, le support comprenant :
- une plaque s'étendant substantiellement suivant une ligne correspondant au bord transversal arrière ;
- au moins une bande s'étendant substantiellement dans un plan transversal à la plaque et suivant une ligne correspondant au bord transversal arrière ;
- des moyens de fixation de la grille d'auvent au support, les moyens de fixation étant disposés sur la ou chaque bande et/ou sur la plaque ; et
- des nervures s'étendant chacune de la plaque à la ou chaque bande.

Le support se caractérise en ce que chaque nervure a une section substantiellement en forme de triangle, la plaque et une bande correspondante délimitant respectivement deux côtés dudit triangle.

En d'autres termes, un support conforme à l'invention a des nervures triangulaires qui relient entre elles la plaque et la ou chaque bande.

Ainsi, la section triangulaire de telles nervures facilite leur déformation sous des efforts verticaux, car leur moment quadratique est relativement faible. De telles nervures augmentent donc la déformabilité et la course en déformation de la partie supérieure d'un support conforme à l'invention. En effet, la forme triangulaire des nervures ménage un espace libre sous ces nervures et au-dessus de la partie inférieure du support des éléments rigides du véhicule.

Selon un mode de réalisation, chaque nervure s'étend substantiellement perpendiculairement à la plaque et à la ou chaque bande.

Ainsi, de telles nervures présentent un moment quadratique relativement élevé suivant une direction verticale, ce qui permet de réduire le nombre de ces nervures le long d'une direction transversale du véhicule sans diminuer la résistance mécanique du support.

Selon un mode de réalisation, le support comprend en outre un plateau relié à la plaque par une première jointure linéaire, le plateau formant avec la plaque un angle compris entre 70° et 110°, de préférence entre 80° et 100°, de sorte que le plateau est disposé sensiblement face à la ou à chaque bande.

Ainsi, lorsque l'ensemble d'auvent est monté sur le véhicule, un tel plateau peut être disposé horizontalement, ce qui limite son moment quadratique suivant une direction verticale et donc facilite sa déformation lors d'un choc entre la tête du piéton et l'ensemble d'auvent.

Selon un mode de réalisation, le support comprend en outre une embase reliée au plateau par une deuxième jointure linéaire, et dans lequel les épaisseurs respectives de la première jointure linéaire et de la deuxième jointure linéaire sont inférieures à l'épaisseur du plateau.

Ainsi, de telles première et deuxième jointures linéaires forment des zones de déformation privilégiées, ce qui augmente l'énergie que peut absorber un support conforme à l'invention lors d'un choc.

Selon un mode de réalisation, le support comprend deux bandes sensiblement coplanaires, les deux bandes étant séparées par un espace dont la longueur est comprise entre 30 mm et 200 mm, de préférence entre 50 mm et 70 mm.

Ainsi, de telles bandes se déforment plus facilement qu'une unique bande, ce qui augmente l'énergie que peut absorber un support conforme à l'invention lors d'un choc.

Selon un mode de réalisation, ledit espace est situé sensiblement dans la région médiane de la plaque.

Ainsi, la raideur du support est diminuée dans la région où la probabilité de choc entre la tête d'un piéton et l'ensemble d'auvent est la plus grande.

Selon un mode de réalisation, chaque nervure s'étend jusqu'à un bord libre respectif de la ou de chaque bande.

Ainsi, la bande et les nervures peuvent présenter un encombrement réduit.

Selon un mode de réalisation, le nombre de nervures compris entre 4 et 8.

Ainsi, un support conforme à l'invention possède un nombre de nervures relativement faible, ce qui facilite sa déformation et sa fabrication.

Selon un mode de réalisation, le support est formé par moulage d'un matériau plastique de synthèse, la plaque, la ou chaque bande, les moyens de fixation et les nervures étant venues de matière.

Ainsi, un support conforme à l'invention peut être fabriqué en grande série donc à coûts relativement limités.

Par ailleurs, la présente invention porte sur ensemble d'auvent comportant une grille d'auvent destinée à être agencée sur un véhicule entre un bord transversal arrière d'un capot moteur et un bord transversal inférieur d'un pare-brise avant, l'ensemble d'auvent étant caractérisé en ce qu'il comprend un support selon l'une des revendications précédentes.

La présente invention sera bien comprise et ses avantages ressortiront aussi à la lumière de la description qui va suivre, donnée uniquement à titre d'exemple non limitatif et faite en référence aux dessins annexés, dans lesquels :
- la figure 1 est une vue en perspective de trois-quart arrière d'une partie d'un ensemble d'auvent conforme à l'invention et comprenant un support conforme à l'invention ;
- la figure 2 est une vue en perspective, suivant un angle peu différent de celui de la figure 1, d'une partie du support de la figure 1 correspondant au détail II à la figure 1 ;
- la figure 3 est une section suivant le plan III à la figure 2 ; et
- la figure 4 est une section similaire à la figure 3 illustrant la déformation d'un support conforme à l'invention.

La figure 1 illustre une partie d'un ensemble d'auvent conforme à l'invention et qui comprend un support 1 disposé près et sous un bord transversal arrière 2 d'un capot moteur 3. Le support 1 est disposé près d'un collecteur d'auvent 4. L'ensemble d'auvent est parfois dénommé boîte à eau.

Un ensemble d'auvent conforma à l'invention comporte une grille d'auvent non représentée, qui est agencée sur le véhicule entre le bord transversal arrière 3 et un bord transversal inférieur d'un pare-brise avant, lequel est symbolisé par la ligne 5 en traits mixtes à la figure 1.

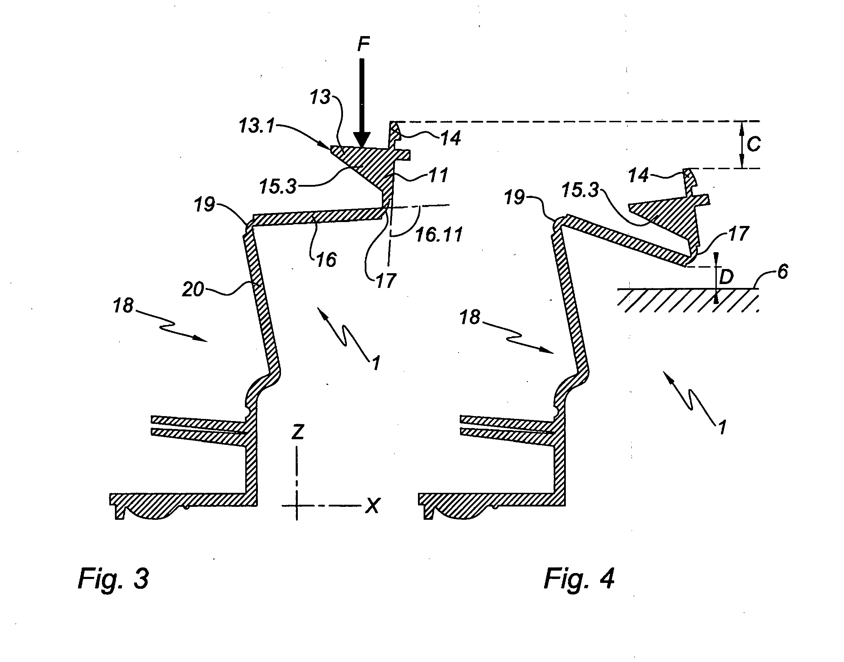

Comme le montrent les figures 2 et 3, le support 1 comprend une plaque 11 qui s'étend substantiellement suivant une ligne correspondant au bord transversal arrière 2, c'est-à-dire sensiblement suivant la ligne 5. La plaque 11 est sensiblement plane et verticale.

La ligne 5 est curviligne avec de grands rayons de courbures. Alternativement, le bord transversal inférieur du pare-brise avant et/ou le bord transversal arrière du capot moteur peuvent être partiellement ou totalement rectilignes.

Dans la présente demande, l'adjectif « longitudinal » fait référence à la longueur du véhicule. Par exemple, une direction longitudinale X correspond à la direction d'avance normale du véhicule. Dans la présente demande, l'adjectif « transversal » fait référence à la largeur du véhicule. Ainsi, une direction transversale Y est perpendiculaire à la direction longitudinale X et à une direction verticale Z.

Le support 1 comprend en outre deux bandes 12 et 13 qui s'étendent substantiellement dans un plan 12 transversal à la plaque 11. Les bandes 12 et 13 sont sensiblement coplanaires entre elles et au plan 12. De plus, les bandes 12 et 13 s'étendent substantiellement suivant la ligne 5.

Le support 1 comprend aussi des languettes 14 qui forment des moyens de fixation de la grille d'auvent au support 1. Les languettes 14 sont disposées sur chaque bande 12 et 13 et sur la plaque 11. Dans l'exemple des figures, les languettes 14 s'étendent dans le prolongement de la plaque 11 et au-dessus des bandes 12 et 13. Les languettes 14 sont conçues pour réaliser un encliquetage élastique de la grille d'auvent sur le support 1.

De plus, le support 1 comprend des nervures 15.1, 15.2, 15.3, 15.4 et 15.5 qui s'étendent chacune de la plaque 11 à chaque bande 12 et 13. En d'autres termes chaque nervure 15.1, 15.2, 15.3, 15.4 ou 15.5 s'étend individuellement entre la plaque 11 et l'une des bandes 12 et 13. Dans l'exemple des figures, le support 1 comprend cinq nervures.

Chaque nervure 15.1 à 15.5 à une section substantiellement en forme de triangle. Comme le montre la figure 3 pour la nervure 15.3, la plaque 11 et l'une des bandes 12 et 13 délimitent respectivement deux côtés du triangle formant la section d'une nervure 15.1 à 15.5. La section triangulaire des nervures 15.1 à 15.5 facilitent la déformation du support 1.

Dans l'exemple des figures chaque nervure 15.1 à 15.5 s'étend substantiellement perpendiculairement à la plaque 11 et à chaque bande 12 ou 13. Par exemple, la nervure 15.3 s'étend dans le plan II, lequel est parallèle au plan X-Z, donc perpendiculaire à la direction transversale Y et donc substantiellement perpendiculaire à la plaque 11 et à chaque bande 12 ou 13. Comme le montre la figure 3, chaque nervure 15.1 à 15.5 s'étend jusqu'à un bord libre respectif 12.1 ou 13.1 de la bande 12 ou 13.

Le support 1 comprend en outre un plateau 16 qui est relié à la plaque 11 par une première jointure linéaire 17. Le plateau 16 forme avec la plaque 11 un angle 16.11 d'environ 100°, de sorte que le plateau 16 est disposé sensiblement face à chaque bande 12 ou 13.

Le support 1 comprend en outre une embase 18 qui est reliée au plateau 16 par une deuxième jointure linéaire 19.

Comme le montre la figure 3, la première jointure 17 et la deuxième jointure 19 ont des épaisseurs respectives qui sont inférieures à l'épaisseur du plateau 16. De plus, l'épaisseur de la première jointure linéaire 17 est inférieure à l'épaisseur de la plaque 11. De même, l'épaisseur de la deuxième jointure linéaire 19 est inférieure à l'épaisseur d'une paroi 20 qui appartient à l'embase 18 et qui s'étend jusqu'à la deuxième jointure linéaire 19. En raison de leur épaisseur réduite, les première et deuxième jointures linéaires 17 et 19 facilitent la déformation du support 1.

Comme le montre la figure 2, les bandes 12 et 13 sont séparées, suivant la direction transversale Y, par un espace 23. Dans l'exemple des figures, l'espace 23 a une longueur L23 d'environ 60 mm. L'espace 23 est situé sensiblement dans la région médiane de la plaque 11, donc approximativement au milieu de la partie supérieure du support 1.

Dans la présente demande, les adjectifs « supérieur » et « inférieur » font référence à l'altitude, respectivement haute et basse, d'un élément, lorsque le support est monté sur un véhicule lui-même posé sur un support horizontal.

Dans l'exemple des figures, le support 1 est formé par moulage par injection d'un matériau plastique de synthèse. La plaque 11, les bandes 12 et 13, les languettes 14, les nervures 15.1 à 15.5, le plateau 16, les première et deuxième jointures linéaires 17 et 19 et l'embase 18 sont venues de matière, c'est-à-dire monobloc.

En fonctionnement normal, l'ensemble d'auvent remplit notamment une fonction d'étanchéité pour le compartiment moteur et une fonction de prise d'air pour l'habitacle.

Lors d'un choc du véhicule avec un piéton, la tête du piéton peut générer un effort F symbolisé par une flèche verticale descendante sur les figures 1 à 3. En fonction de son intensité, l'effort F induit la déformation de la partie supérieure du support 1. Cette déformation entraine une course C de la partie supérieure du support 1 et en particulier des languettes 14.

La déformation du support 1 provient de la déformation des nervures 15.1 à 15.5, de la plaque 11, du plateau 16 et des première et deuxième jointures linéaires 17 et 19.

La déformation du support 1 permet d'absorber une partie significative de l'énergie produite par l'impact de la tête du piéton sur l'ensemble d'auvent conforme à l'invention. Ainsi, le support 1 diminue fortement la gravité des blessures provoquées par un tel impact.

De plus, la section triangulaire des nervures 15.1 à 15.5 permet d'augmenter la course totale de la partie supérieure du support 1, mesuré par exemple au niveau des languettes 14, par rapport à un support de l'art antérieur.

En effet, dans la position représentée à la figure 4, la partie supérieure du support 1 se trouve à une distance D des éléments rigides 6 appartenant au véhicule. La partie supérieure du support 1 peut donc encore parcourir la distance D avant d'entrer en contact avec les éléments rigides 6. En d'autres termes, la course totale du support 1 équivaut à la somme de la course C et de la distance D.

Généralement, la course totale de la partie supérieure s'un support de l'art antérieur est limitée à la seule course C.

Selon d'autres caractéristiques avantageuses mais facultatives, prises isolément ou selon toutes combinaisons techniquement admissibles :
- le support est réalisé en plusieurs pièces, par exemple deux ;
- les moyens de fixation coopèrent avec une pièce intermédiaire, laquelle est fixée à la grille d'auvent.

## Revendications

1. Support (1), pour supporter une grille d'auvent agencée sur un véhicule entre un bord transversal arrière (2) d'un capot moteur (3) et un bord transversal inférieur d'un pare-brise avant, le support (1) comprenant :
- une plaque (11) verticale s'étendant substantiellement suivant une ligne (5) correspondant au bord transversal arrière (2) ;
- au moins une bande (12, 13) s'étendant substantiellement dans un plan (P12) transversal à la plaque (11) et suivant une ligne (5) correspondant au bord transversal arrière (2) ;
- des moyens de fixation (14) de la grille d'auvent au support (1), les moyens de fixation (14) étant disposés sur la ou chaque bande (12, 13) et/ou sur la plaque (11) ; et
- des nervures (15.1, 15.2, 15.3, 15.4, 15.5) s'étendant chacune de la plaque (11) à la ou chaque bande (12, 13) ;
**caractérisé en ce que** chaque nervure (15.1, 15.2, 15.3, 15.4, 15.5) a une section substantiellement en forme de triangle, la plaque (11) et une bande (12, 13) correspondante délimitant respectivement deux côtés dudit triangle, la forme triangulaire des nervures ménageant un espace libre sous ces nervures et au-dessus de la partie inférieure du support.

2. Support (1) selon la revendication 1, chaque nervure (15.1, 15.2, 15.3, 15.4, 15.5) s'étend substantiellement perpendiculairement à la plaque (11) et à la ou chaque bande (12, 13).

3. Support (1) selon l'une des revendications précédentes, comprenant en outre un plateau (16) relié à la plaque (11) par une première jointure linéaire (17), le plateau (16) formant avec la plaque (11) un angle (16.11) compris entre 70° et 110°, de préférence entre 80° et 100°, de sorte que le plateau (16) est disposé sensiblement face à la ou à chaque bande (12, 13).

4. Support (1) selon la revendication 3, comprenant en outre une embase (18, 20) reliée au plateau (16) par une deuxième jointure linéaire (19), et dans lequel les épaisseurs respectives de la première jointure linéaire (16) et de la deuxième jointure linéaire (19) sont inférieures à l'épaisseur du plateau (16).

5. Support (1) selon l'une des revendications précédentes, comprenant deux bandes (12, 13) sensiblement coplanaires, les deux bandes (12, 13) étant séparées par un espace (23) dont la longueur (L23) est comprise entre 30 mm et 200 mm, de préférence entre 50 mm et 70 mm.

6. Support (1) selon la revendication 5, dans lequel ledit espace (23) est situé sensiblement dans la région médiane de la plaque (11).

7. Support (1) selon l'une des revendications précédentes, dans lequel chaque nervure (15.1, 15.2, 15.3, 15.4, 15.5) s'étend jusqu'à un bord libre (12.1, 13.1) respectif de la ou de chaque bande (12, 13).

8. Support (1) selon l'une des revendications précédentes, dans lequel le nombre de nervures (15.1, 15.2, 15.3, 15.4, 15.5) est compris entre 4 et 8.

9. Support (1) selon l'une des revendications précédentes, dans lequel le support (1) est formé par moulage d'un matériau plastique de synthèse, la plaque (11), la ou chaque bande (12, 13), les moyens de fixation (14) et les nervures (15.1, 15.2, 15.3, 15.4, 15.5) étant venues de matière.

10. Ensemble d'auvent comportant une grille d'auvent destinée à être agencée sur un véhicule entre un bord transversal arrière (2) d'un capot moteur (3) et un bord transversal inférieur d'un pare-brise avant, l'ensemble d'auvent étant **caractérisé en ce qu'**il comprend un support (1) selon l'une des revendications précédentes.

## Patentansprüche

1. Halterung (1) zum Halten eines Windlaufgitters, das auf einem Fahrzeug zwischen einem hinteren Querrand (2) einer Motorhaube (3) und einem unteren Querrand einer Windschutzscheibe eingerichtet ist, wobei die Halterung (1) Folgendes aufweist:
- eine vertikale Platte (11), die sich im Wesentlichen entlang einer Linie (5), die dem hinteren Querrand (2) entspricht, erstreckt,
- mindestens ein Band (12, 13), das sich im Wesentlichen in einer Ebene (P12) quer zu der Platte (11) und entlang einer Linie (5), die dem hinteren Querrand (2) entspricht, erstreckt,
- Befestigungsmittel (14) des Windlaufgitters an der Halterung (1), wobei die Befestigungsmittel (14) auf dem oder jedem Band (12, 13) und/oder auf der Platte (11) angeordnet sind, und
- Rippen (15.1, 15.2, 15.3, 15.4, 15.5), die sich jeweils von der Platte (11) zu dem oder jedem Band (12, 13) erstrecken,
**dadurch gekennzeichnet, dass** jede Rippe (15.1, 15.2, 15.3, 15.4, 15.5) einen Querschnitt im Wesentlichen in Dreiecksform hat, wobei die Platte (11) und ein entsprechendes Band (12, 13) jeweils zwei Seiten des Dreiecks abgrenzen, wobei die Dreiecksform der Rippen einen freien Raum unter diesen Rippen und oberhalb des unteren Teils der Halterung einrichtet.

2. Halterung (1) nach Anspruch 1, wobei sich jede Rippe (15.1, 15.2, 15.3, 15.4, 15.5) (15.1, 15.2, 15.3, 15.4, 15.5) im Wesentlichen senkrecht zu der Platte (1) und zu dem oder jedem Band (12, 13) erstreckt.

3. Halterung (1) nach einem der vorhergehenden Ansprüche, die ferner eine Tafel (16) aufweist, die mit der Platte (11) durch eine erste lineare Fuge (17) verbunden ist, wobei die Tafel (16) mit der Platte (11) einen Winkel (16.11) zwischen 70° und 110°, vorzugsweise zwischen 80° und 100° derart bildet, dass die Tafel (16) im Wesentlichen gegenüber dem oder jedem Band (12, 13) angeordnet ist.

4. Halterung (1) nach Anspruch 3, die ferner einen Sockel (18, 20) aufweist, der mit der Tafel (16) durch eine zweite lineare Fuge (19) verbunden ist, und in dem die jeweiligen Stärken der ersten linearen Fuge (17) und der zweiten linearen Fuge (19) kleiner sind als die Stärke der Tafel (16).

5. Halterung (1) nach einem der vorhergehenden Ansprüche, die zwei im Wesentlichen koplanare Bänder (12, 13) aufweist, wobei die zwei Bänder (12, 13) durch einen Raum (23) getrennt sind, dessen Länge (L23) zwischen 30 mm und 200 mm, vorzugsweise zwischen 50 mm und 70 mm liegt.

6. Halterung (1) nach Anspruch 5, bei der der Raum (23) im Wesentlichen in dem mittleren Bereich der Platte (11) liegt.

7. Halterung (1) nach einem der vorhergehenden Ansprüche, bei der sich jede Rippe (15.1, 15.2, 15.3, 15.4, 15.5) bis zu einem jeweiligen freien Rand (12.1, 13.1) des oder jedes Bands (12, 13) erstreckt.

8. Halterung (1) nach einem der vorhergehenden Ansprüche, bei der die Anzahl der Rippen (15.1, 15.2, 15.3, 15.4, 15.5) zwischen 4 und 8 liegt.

9. Halterung (1) nach einem der vorhergehenden Ansprüche, bei der die Halterung (1) durch Formen eines Kunststoffmaterials hergestellt ist, wobei die Platte (11), das oder jedes Band (12, 13), die Befestigungsmittel (14) und die Rippen (15.1, 15.2, 15.3, 15.4, 15.5) aus einem Teil bestehen.

10. Windlaufanordnung, die ein Windlaufgitter aufweist, das dazu bestimmt ist, auf einem Fahrzeug zwischen einem hinteren Querrand (2) einer Motorhaube (3) und einem unteren Querrand einer Windschutzscheibe eingerichtet zu sein, wobei die Windlaufanordnung **dadurch gekennzeichnet ist, dass** sie eine Halterung (1) nach einem der vorhergehenden Ansprüche aufweist.

## Claims

1. A mounting (1) for supporting a cowl vent grille arranged on a vehicle between a rear transverse edge (2) of an engine cowl (3) and a lower transverse edge of a front windscreen, the mounting (1) including:
- a vertical plate (11) extending substantially along a line (5) corresponding to the rear transverse edge (2);
- at least one strip (12, 13) extending substantially in a plane (P12) transverse to the plate (11) and along a line (5) corresponding to the rear transverse edge (2);
- means (14) for attaching the cowl vent grille to the mounting (1), the attachment means (14) being disposed on the or each strip (12, 13) and/or on the plate (11); and
- ribs (15.1, 15.2, 15.3, 15.4, 15.5) each extending from the plate (11) to the or each strip (12, 13);
**characterized in that** each rib (15.1, 15.2, 15.3, 15.4, 15.5) has a substantially triangular cross-section, the plate (11) and a corresponding strip (12, 13) delimiting respectively two sides of the said triangle, the triangular shape of the ribs providing a free space beneath these ribs and above the lower part of the mounting.

2. The mounting (1) according to claim 1, each rib (15.1, 15.2, 15.3, 15.4, 15.5) extends substantially perpendicularly to the plate (11) and to the or each strip (12, 13).

3. The mounting (1) according to one of the preceding claims, including furthermore a platform (16) connected to the plate (11) by a first linear joint (17), the platform (16) forming with the plate (11) an angle (16.11) comprised between 70° and 110°, preferably between 80° and 100°, such that the platform (16) is disposed substantially facing the or each strip (12, 13).

4. The mounting (1) according to claim 3, including furthermore a base (18, 20) connected to the platform (16) by a second linear joint (19), and in which the respective thicknesses of the first linear joint (16) and of the second linear joint (19) are less than the thickness of the platform (16).

5. The mounting (1) according to one of the preceding claims, including two substantially coplanar strips (12, 13), the two strips (12, 13) being separated by a space (23), the length (L23) of which is comprised between 30 mm and 200 mm, preferably between 50 mm and 70 mm.

6. The mounting (1) according to claim 5, in which the said space (23) is situated substantially in the median region of the plate (11).

7. The mounting (1) according to one of the preceding claims, in which each rib (15.1, 15.2, 15.3, 15.4, 15.5) extends up to a respective free edge (12.1, 13.1) of the or each strip (12, 13).

8. The mounting (1) according to one of the preceding claims, in which the number of ribs (15.1, 15.2, 15.3, 15.4, 15.5) is comprised between 4 and 8.

9. The mounting (1) according to one of the preceding claims, in which the mounting (1) is formed by moulding of a synthetic plastic material, the plate (11), the or each strip (12, 13), the attachment means (14) and the ribs (15.1, 15.2, 15.3, 15.4, 15.5) being integrally formed from the material.

10. A cowl vent assembly comprising a cowl vent grille intended to be arranged on a vehicle between a rear transverse edge (2) of an engine cowl (3) and a lower transverse edge of a front windscreen, the cowl vent assembly being **characterized in that** it includes a mounting (1) according to one of the preceding claims.
